# EUROPÄISCHE PATENTANMELDUNG

(11) **EP 2 664 729 A2**
(43) Veröffentlichungstag der Anmeldung: **20.11.2013**
(21) Anmeldenummer: 13450016.4
(22) Anmeldetag: 22.04.2013
(51) Int. Cl.: E04F 13/08, F16B 5/07, E04F 13/072

(54) **Anordnung mit flächigen Bauteilen**

(30) Priorität: 15.05.2012 AT 5802012
(71) Anmelder: Forster Verkehrs- und Werbetechnik GmbH, 3340 Waidhofen an der Ybbs (AT)
(72) Erfinder: Moro, Andreas, 4464 Kleinreifling (AT)
(74) Vertreter: Beer & Partner Patentanwälte KG

(57) **Zusammenfassung**

Eine Anordnung (1), bestehend aus einer an einem beliebigen Träger, z.B. der Wand eines Gebäudes oder einem Gestell, zu befestigenden Unterkonstruktion (2) und an der Unterkonstruktion (2) anzubringenden Bauteilen (20), insbesondere Videopaneelen, umfasst in der Unterkonstruktion (2) an dem Träger befestigte Halteschienen (3), in denen einseitig offene Aufnahmeöffnungen (11) für an den Bauteilen (20) befestigte Zungen (22) vorgesehen sind. Den Aufnahmeöffnungen (11) für die Aufnahme der Zungen (22) sind zum Verriegeln der Zungen (22) an den Halteschienen (3) Arretierleisten (10) mit Verrieglungsnasen (12) vorgesehen, die mit Hilfe eines Arretierhebels (13) in Längsrichtung der Halteschienen (3) aus einer Verriegelungs- in eine Entriegelungsstellung verstellbar sind.

## Beschreibung

Die Erfindung betrifft eine Anordnung mit den Merkmalen des einleitenden Teils von Anspruch 1.

Der Erfindung liegt die Aufgabe zu Grunde, eine Anordnung der eingangs genannten Gattung zur Verfügung zu stellen, die das einfache Befestigen plattenförmiger Bauteile an einem Träger, beispielsweise an einem Gestell, einer Wand oder an einem anderen tragenden Bauwerksteil erlauben.

Gelöst wird diese Aufgabe erfindungsgemäß mit einer Anordnung, welche die Merkmale von Anspruch 1 aufweist.

Bevorzugte und vorteilhafte Ausgestaltungen der Erfindung sind Gegenstand der Unteransprüche.

Da bei der erfindungsgemäßen Anordnung eine Unterkonstruktion vorgesehen ist, die an einem beliebigen Träger, z.B. einem Bauwerksteil, befestigt werden kann und die plattenförmigen Bauteile an der Unterkonstruktion lösbar befestigt sind, ergibt sich eine große Flexibilität und die Möglichkeit, die plattenförmigen Bauteile an der Unterkonstruktion der Anordnung beliebiger Anordnung anzuordnen und auch einzelne Bauteile abzunehmen oder auszutauschen.

Insbesondere ist im Rahmen der Erfindung vorgesehen, dass die an der Unterkonstruktion zu befestigenden Bauteile der erfindungsgemäßen Anordnung an ihrer, der Unterkonstruktion zuzukehrenden (Rück-)Seite Zungen aufweisen, die in Aufnahmeöffnungen der Unterkonstruktion eingreifen und in diesen verriegelt werden können.

Das Verriegeln der Zungen der plattenförmigen Bauteile in Aufnahmeöffnungen der Unterkonstruktion kann mit Hilfe von Arretierleisten erfolgen, welche die Aufnahmeöffnungen in der Unterkonstruktion, in welche die Zungen eingreifen, wenigstens teilweise verschließen. Beispielsweise sind diese Arretierleisten mit Hilfe von Hebeln ("Arretierhebel") verschiebbare Leisten, die an, die Aufnahmeöffnungen aufweisenden Halteschienen der Unterkonstruktion geführt sind.

Weitere Einzelheiten und Merkmale der Erfindung ergeben sich aus der nachstehenden Beschreibung eines bevorzugten Ausführungsbeispiels (Videowall)einer Anordnung gemäß der Erfindung unter Bezugnahme auf die Zeichnungen. Es zeigt
- Fig. 1: eine erfindungsgemäße Anordnung, die teilweise mit Bauteilen in Form von Videopaneelen versehen ist,
- Fig 2: eine Einzelheit einer Unterkonstruktion im Bereich von Halteschienen,
- Fig. 3: einen als Videopaneel ausgeführten Bauteil von seiner der Unterkonstruktion der Anordnung zuzukehrenden Seite ausgesehen,
- Fig. 4: im Schnitt eine Halteschiene der Unterkonstruktion mit Arretierleiste und Arretierhebel in verriegelter Stellung,
- Fig. 5: im Schnitt eine Halteschiene mit Arretierleiste in entriegelter Stellung,
- Fig. 6: im Hoizontalschnitt eine Halteschiene mit Arretierleiste und Arretierhebel und
- Fig. 7: im Horizontalschnitt eine Halteleiste mit an ihr festgelegten plattenförmigen Bauteilen (Videopaneel).

Eine erfindungsgemäße Anordnung 1 besitzt in ihrer Unterkonstruktion 2 wenigstens zwei, insbesondere aber mehr als zwei, an einem beliebigen Träger, z.B. einem Bauwerksteil, in lotrechter und im wesentlicher lotrechter Ausrichtung befestigte Halteschienen 3.

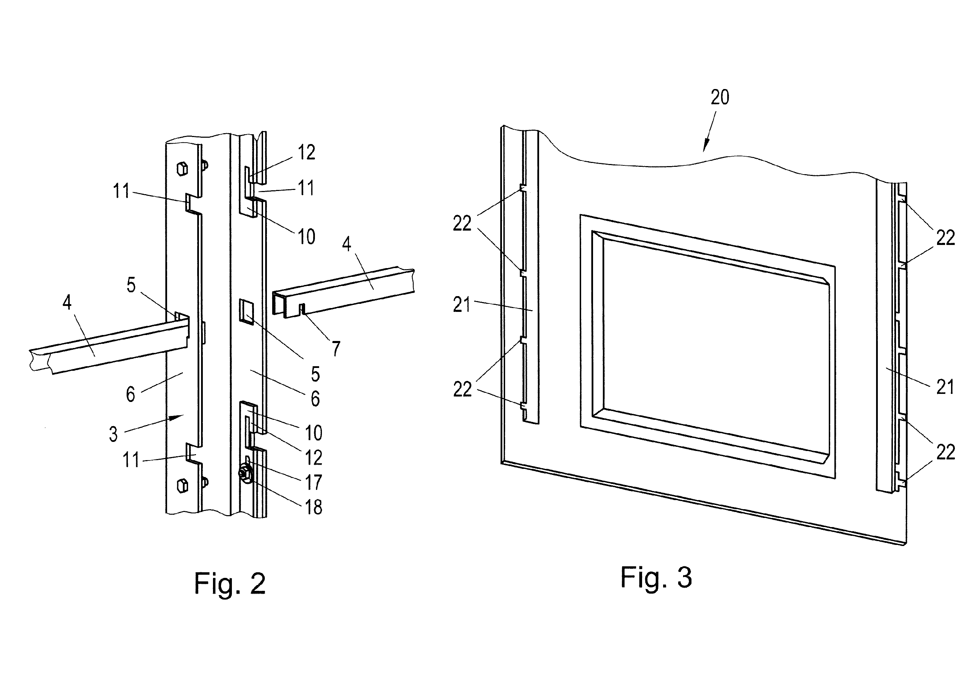

Wie in Fig. 2 angedeutet, wird der seitliche Abstand der an dem Bauwerksteil zu befestigenden Halteschienen 3 voneinander durch Querstreben 4 definiert, die in Löcher 5 in den Schenkeln 6 der Halteschienen 3 eingesetzt sind und die mit nach unten offenen Schlitzen 7 über den unteren Rand dieser Löcher 5 gesteckt werden, sodass der seitliche Abstand der Halteschienen 3 durch die Querstreben 4, nämlich den Abstand der Schlitze 7 in einer Querstrebe 4, definiert ist.

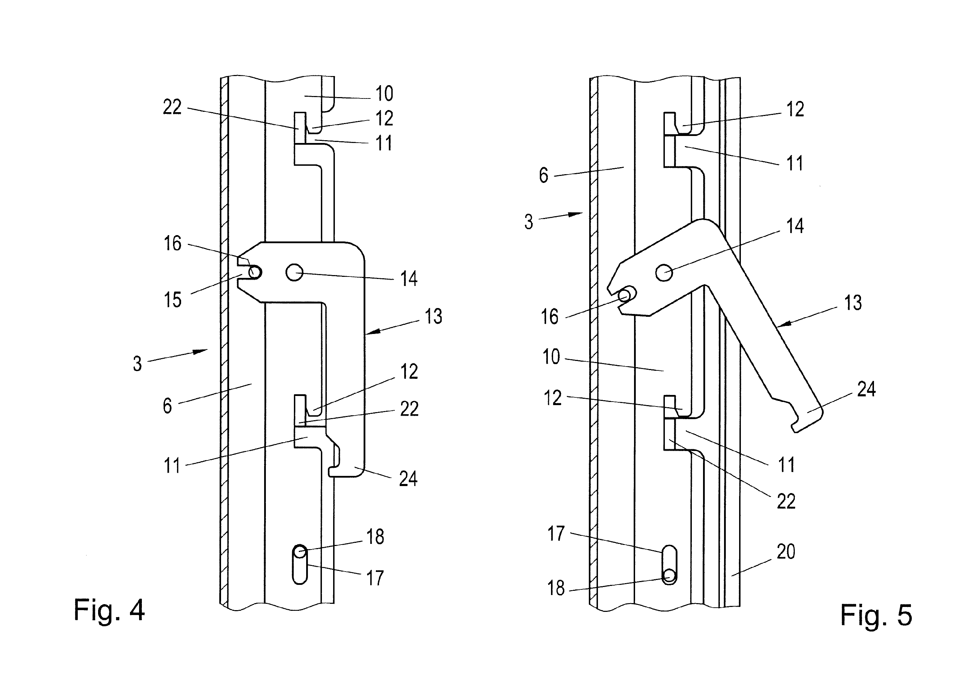

An den Halteschienen 3 sind Arretierleisten 10 verschiebbar geführt, die, wie in Fig. 2, 4 und 5 gezeigt, Verriegelungsnasen 12 tragen, die nach vorne, also vom Steg der Halteschienen 3 weg, offenen Ausnehmungen 11 ("Aufnahmeöffnungen") in den Schenkeln 5 der Halteschienen 3 zugeordnet sind. Zur Führung der Arretierleisten 10 an den seitlichen Schenkeln 6 der Halteschiene 3 sind in den Arretierleisten 10 Schlitze 17 vorgesehen, die in Längsrichtung ausgerichtet sind und in die Führungszapfen 18, die an der Innenseite der Schenkel 6 der Halteschienen 3 vorgesehen sind, eingreifen. Die Arretierleisten 10 weisen einseitig (vom Steg der Halteschienen 3 weg) offene Aussparungen auf, in die von einer Seite her die Verriegelungsnasen 12, die im wesentlichen in Längsrichtung der Arretierleisten 10 ausgerichtet sind, ragen (vgl. Fig. 4)

Zum Verstellen der Arretierleisten 10 gegenüber den Halteschienen 3 aus der in Fig. 5 gezeigten entriegelten, offenen Stellung (die Ausnehmungen 11 sind "offen") in die in Fig. 4 gezeigte Verriegelungsstellung, in welcher die Verriegelungsnasen 12 der Arretierleisten 10 die Ausnehmungen 11 in den Schenkeln 6 der Halteschienen 3 wenigstens teilweise verschließen, sind verschwenkbare, gewinkelte Arretierhebel 13 vorgesehen. Die Arretierhebel 13 sind an den Arretierleisten 10 um Lager 14 verschwenkbar gelagert und greifen mit einem Maul 15 über einen an den Schenkeln 6 der Halteschienen 3 vorgesehenen Stift 16. Durch Betätigen (Verschwenken, vgl. Fig. 4 und 5) der Arretierhebel 13 kann die Arretierleiste 10 gegenüber den Halteschienen 3 zum Verriegeln bzw. Entriegeln der Ausnehmungen 11 bewegt werden.

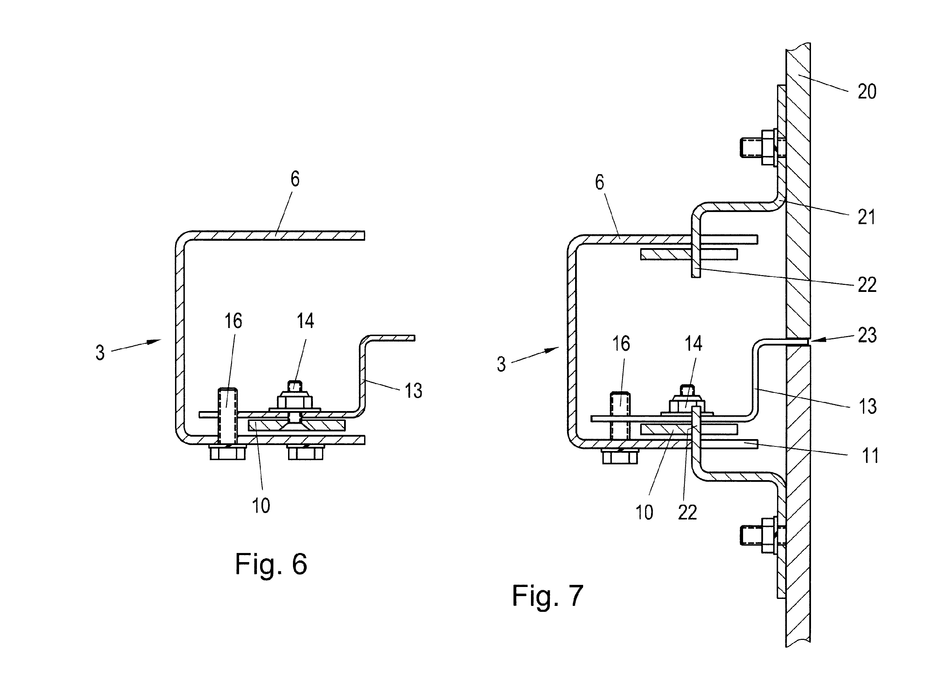

Die an der Unterkonstruktion der Anordnung zu befestigenden Bauteile 20, beispielsweise ein in Fig. 3 teilweise gezeigtes Videopaneel, besitzt an seiner der Unterkonstruktion 1, umfassend Halteschienen 3, Querstreben 4, Arretierleisten 10 und Arretierhebel 13, zugekehrten Seite Schienen 21, von denen Zungen 22 abstehen. Die Zungen 22 werden beim Anbringen des Bauteils 20 an der Unterkonstruktion 2 in die Ausnehmungen 11 in den Schenkeln 6 der Halteschienen 3 eingeführt und dann durch Betätigen des Arretierhebels 13 bewirktes Verschieben der Arretierleiste 10 in den Ausnehmungen 11 der Halteschienen 3 festgelegt ("verriegelt"), wie dies in Fig. 4 und 7 gezeigt ist.

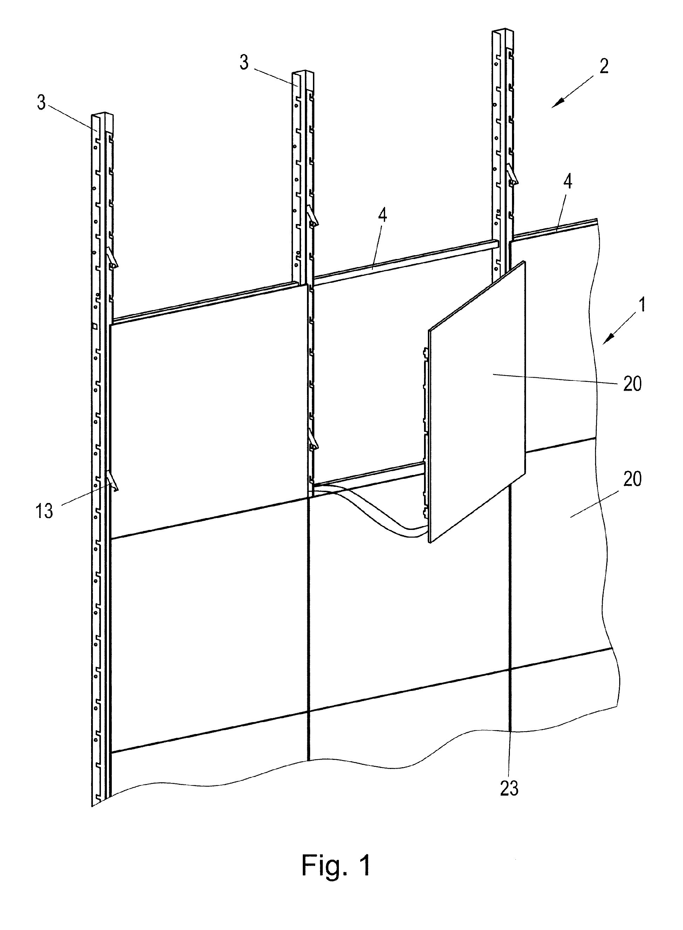

Ein Vorteil der erfindungsgemäßen Anordnung 1, insbesondere in dem in den Fig. 1 bis 7 gezeigten Ausführungen der Unterkonstruktion 2 derselben ist es, dass die Arretierhebel 13 in ihrer Wirkstellung (vgl. Fig. 4 und Fig. 7) über die Vorderseite der an der Unterkonstruktion 2 befestigten Bauteile 20 der Anordnung 1 nicht vorstehen (sie sind im Spalt 23 zwischen (nebeneinander angeordneten) benachbarten Bauteilen 20 aufgenommen), sodass sich ein optisch geschlossener Gesamteindruck der erfindungsgemäßen Anordnung ergibt.

Wenn ein einzelner Bauteil 20 der erfindungsgemäßen Anordnung 1 von der Unterkonstruktion 2 abzunehmen ist, besteht die Möglichkeit, mit Hilfe eines schmalen (flachen) hakenartigen Werkzeuges den Arretierhebel 13 an seinem Betätigungsteil 24 zu erfassen, indem das Werkzeug zwischen die, mit Abstand nebeneinander angeordneten Bauteile 20 eingeführt wird und der Arretierhebel 13 aus der in Fig. 4 gezeigten Stellung in die in Fig. 5 gezeigte Stellung verschwenkt wird, sodass der betroffene Bauteil 20'im Ausführungsbeispiel am Videopaneel von der Unterkonstruktion 2 abgenommen werden kann, weil die Zunge 22, nachdem die Verriegelungsnase 12 zurückgezogen worden ist, entriegelt ist.

Zusammenfassend kann ein Ausführungsbeispiel der Erfindung wie folgt beschrieben werden:
Eine Anordnung 1, bestehend aus einer an einem beliebigen Träger, z.B. der Wand eines Gebäudes oder einem Gestell, zu befestigenden Unterkonstruktion 2 und an der Unterkonstruktion 2 anzubringenden Bauteilen 20, insbesondere Videopaneelen, umfasst in der Unterkonstruktion 2 an dem Träger befestigte Halteschienen 3, in denen einseitig offene Aufnahmeöffnungen 11 für an den Bauteilen 20 befestigte Zungen 22 vorgesehen sind. Den Aufnahmeöffnungen 11 für die Aufnahme der Zungen 22 sind zum Verriegeln der Zungen 22 an den Halteschienen 3 Arretierleisten 10 mit Verrieglungsnasen 12 vorgesehen, die mit Hilfe eines Arretierhebels 13 in Längsrichtung der Halteschienen 3 aus einer Verriegelungs- in eine Entriegelungsstellung verstellbar sind.

## Patentansprüche

1. Anordnung (1), umfassend eine Unterkonstruktion (2) und an der Unterkonstruktion (2) festlegbare Bauteile (20), **gekennzeichnet durch** Halteschienen (3), in denen einseitig offene Ausnehmungen (11) für die Aufnahme von an den Bauteilen (20) vorgesehenen Zungen (22) vorgesehen sind und **durch** verschiebbare Arretierleisten (10), die den Ausnehmungen (11) in den Halteschienen (3) zum Verriegeln der Zungen (22) der Bauteile (20) an den Halteschienen (3) zugeordnet sind.

2. Anordnung nach Anspruch 1, **dadurch gekennzeichnet, dass** die Arretierleisten (10) an den Schenkeln (6) der Halteschienen (3) verschiebbar geführt sind.

3. Anordnung nach Anspruch 2, **dadurch gekennzeichnet, dass** den Arretierleisten (10) verschwenkbare Betätigungshebel (13) zugeordnet sind.

4. Anordnung nach Anspruch 3, **dadurch gekennzeichnet, dass** die Betätigungshebel (13) an den Arretierleisten (10) verschwenbar gelagert sind und mit einem Maul (15) über einen, an den Halteschienen (3) vorgesehenen Stift (16) greifen.

5. Anordnung nach einem der Ansprüche 1 bis 4, **dadurch gekennzeichnet, dass** die Halteschienen (10) Arretiernasen (12) aufweisen, die in der Verriegelungsstellung der Arretierleisten (10), die in den Schenkeln (6) der Halteschienen (3) vorgesehene Ausnehmungen (11) wenigstens teilweise verschließen.

6. Anordnung nach einem der Ansprüche 1 bis 5, **dadurch gekennzeichnet, dass** die Zungen (22) der Bauteile (20) an Schienen (21) vorgesehen sind, die an der der Unterkonstruktion (2) zuzukehrenden Seite der Bauteile (20) vorgesehen sind.
